# EUROPÄISCHE PATENTSCHRIFT

(11) **EP 4 065 514 B1**
(45) Veröffentlichungstag und Bekanntmachung des Hinweises auf die Patenterteilung: **01.10.2025**
(21) Anmeldenummer: 20812015.4
(22) Anmeldetag: 23.11.2020
(51) Int. Cl.: C01C 1/04, F22G 1/14, F27D 17/00

(54) **VERFAHREN UND ANLAGE ZUR HERSTELLUNG VON AMMONIAK**
PROCESS AND PLANT FOR PREPARATION OF AMMONIA
PROCÉDÉ ET INSTALLATION DE PRÉPARATION D'AMMONIAC

(30) Priorität: 27.11.2019 DE 102019218350
(43) Veröffentlichungstag der Anmeldung: 05.10.2022
(73) Patentinhaber: thyssenkrupp Uhde GmbH, 44141 Dortmund (DE); thyssenkrupp AG, 45143 Essen (DE)
(72) Erfinder: PASCHANT, Silke, 44141 Dortmund (DE); NÖLKER, Klaus, 44265 Dortmund (DE); KELLER, Patrick, 44141 Dortmund (DE); SALI, Peter, 44797 Bochum (DE)
(74) Vertreter: thyssenkrupp Intellectual Property GmbH
(86) Internationale Anmeldenummer: PCT/EP2020/083074
(87) Internationale Veröffentlichungsnummer: WO 2021/105060

(56) Entgegenhaltungen:
- EP-B1- 2 294 009
- WO-A1-2017/182385
- DE-A1- 2 201 025
- US-A- 4 213 954
- US-B1- 9 751 773

## Beschreibung

Die vorliegende Erfindung betrifft ein Verfahren zur Herstellung von Ammoniak, bei dem die Eduktgase Stickstoff und Wasserstoff in einem ersten Ammoniakkonverter umgesetzt werden, welcher mindestens ein Katalysatorbett umfasst, wobei das aus dem ersten Ammoniakkonverter austretende Produktgasgemisch durch wenigstens einen Abhitzekessel geleitet und gekühlt wird, wobei Dampf erzeugt wird, wobei das Produktgasgemisch danach stromabwärts des Abhitzekessels einem zweiten Ammoniakkonverter zugeführt wird, welcher ebenfalls mindestens ein Katalysatorbett umfasst.

Eine Reihe von Produkten in der Grundstoffindustrie, wie z.B. Ammoniak, werden in großtechnischen Gaskatalysen unter Einsatz von Festbettkatalysatoren synthetisiert. Die Synthesen verlaufen in der Regel bei Volumenabnahme unter sehr hohen Arbeitsdrücken bei hohen Arbeitstemperaturen.

Bei der Herstellung von Ammoniak enthält das Synthesegas Wasserstoff und Stickstoff und gegebenenfalls zusätzlich Inertgase wie Methan und/oder Edelgase. Bei diesem Verfahren wird üblicherweise zunächst das frische Synthesegas auf einen hohen Druck verdichtet und das verdichtete Synthesegas in einen Kreislauf eingespeist, der durch einen oder mehrere katalysatorgefüllte Reaktoren geführt wird, in denen Ammoniak erzeugt wird. Im Kreislauf ist üblicherweise ein Abscheidesystem vorgesehen, mit dem das erzeugte Ammoniak aus dem Kreislauf in flüssiger Form entnommen wird.

Die Ammoniak-Bildungsreaktion ist eine ausgeprägte Gleichgewichtsreaktion, deren Gleichgewichtslage sich mit zunehmender Temperatur immer mehr auf die Seite der Reaktanden verlagert. Im Bereich der üblichen Arbeitstemperaturen der Katalysatorbetten und Arbeitsdrücken von etwa 200 bar werden nur Ammoniak-Gleichgewichtskonzentrationen von 20-25% erreicht. Nach dem Prinzip von Le Chatelier kann durch Erhöhung des Arbeitsdruckes die Gleichgewichtslage zu höheren Ammoniakkonzentrationen verschoben werden. Einer Erhöhung des Synthesedruckes sind aber durch die verfügbaren Verdichter enge Grenzen gesetzt. Des Weiteren wirkt sich die zusätzliche Verdichterarbeit negativ auf den Prozesswirkungsgrad aus und der höhere Arbeitsdruck bedingt größere Wanddicken der Apparate und damit spezifisch höhere Herstellungskosten.

Die Ammoniak-Bildungsreaktion ist stark exotherm, so dass die Temperatur des Prozessgases beim Durchlauf durch das Katalysatorbett fortlaufend zunimmt, wenn keine Wärmeabfuhr vorgenommen wird.

### Stand der Technik

Aus der WO 2017/182385 A1 ist ein Verfahren zur Herstellung von Ammoniak bekannt, bei dem in einem ersten Ammoniakkonverter das Eduktgasgemisch teilweise zu Ammoniak umgesetzt wird und das erhaltene Produktgasgemisch, welches neben den beiden Edukten Stickstoff und Wasserstoff bereits einen Anteil an Ammoniak enthält, wird danach für die weitere Umsetzung einem zweiten Ammoniakkonverter zugeleitet. Dabei ist zwischen dem ersten Ammoniakkonverter und dem zweiten Ammoniakkonverter ein sogenannter Zwischenwärmetauscher angeordnet, dessen Aufgabe es ist, das aus dem ersten Ammoniakkonverter austretende Produktgasgemisch zu kühlen. Dazu wird dieser Zwischenwärmetauscher von Kesselspeisewasser durchströmt und durch Übertragung der Wärme aus dem Produktgasgemisch wird Hochdruckdampf gebildet. Bei diesem bekannten Verfahren wird das Produktgasgemisch in dem Zwischenwärmetauscher gekühlt und anschließend wieder vorgewärmt, bevor es in den zweiten Ammoniakkonverter eintritt. Bei diesem bekannten Verfahren wird, wie bei den meisten Verfahren zur Herstellung von Ammoniak, das Synthesegas in einem Frontend der Ammoniakanlage durch Reformieren von Erdgas hergestellt und aufbereitet, wodurch es neben den Eduktgasen noch Inertgase wie Methan und Edelgase enthält. In einem solchen Frontend ist es möglich, den bei der Synthesegasherstellung erzeugten Dampf im Frontend zu überhitzen.

Die Verwendung eines Dampfüberhitzers in einer Anlage zur Herstellung von Ammoniak, auch in Kombination mit einem im Strömungsweg diesem nachgeordneten Abhitzekessel wird in der EP 2 294 009 B1 beschrieben. Bei dieser bekannten Anlage ist ein typisches Frontend vorhanden, in dem zunächst das Synthesegas für die Ammoniakherstellung aus Erdgas erzeugt wird, wobei das Frontend einen Primärreformer, einen Sekundärreformer und einen Wassergas-Shift-Reaktor umfasst. Bei dieser bekannten Anlage wird zudem nur ein einziger Ammoniakkonverter verwendet.

Eine Anlage zur Herstellung von Ammoniak ist aus US 4 213 954 A bekannt. In dieser Anlage wird der Wasserstoff in einem Frontend aus einem kohlenstoffhaltigen Rohstoff gewonnen, wobei die beim Reformieren entstehende Wärme zum Bereitstellen von Hochdruckdampf eingesetzt wird. Die Ammoniaksynthese wird in zwei Reaktoren durchgeführt, wobei das Reaktionsgemisch aus dem ersten Reaktor vor dem Einleiten in den zweiten Reaktor gekühlt wird. Dafür wird das Reaktionsgemisch aus dem ersten Reaktor zunächst einem Dampfüberhitzer zugeführt, welcher mit Hochdruckdampf gespeist wird, und anschließend zum Vorwärmen des Kesselspeisewassers für den Hochdruckdampftank verwendet. Wird die Ammoniaksynthese heruntergefahren ohne die Synthesegasproduktion ebenfalls zu unterbrechen, dann verringert sich der Nachschub an Kesselspeisewasser und Dampf aus der Ammoniaksynthese und damit auch der Dampffluss durch die Dampfüberhitzer. Um die daraus resultierende Überhitzung zu verhindern, wird die Ammoniaksynthese bei vermindertem Druck durchgeführt.

Das Verfahren gemäß der vorliegenden Anmeldung bezieht sich in erster Linie auf Anlagen, bei denen die beiden Edukte Stickstoff und Wasserstoff für die Ammoniaksynthese vor Ort bereits in ausreichend reiner Form zur Verfügung stehen und daher keine Erzeugung von Synthesegas aus Erdgas vorgesehen ist und daher auch kein Frontend an der Anlage vorhanden ist; eine Anlage zur Herstellung von Ammoniak, in welcher der Wasserstoff elektrisch erzeugt wird und der Stickstoff aus Luft entweder kryogen oder aber durch Verbrennen mit Wasserstoff zum Binden des Luftsauerstoffs erhalten wird, ist etwa aus DE 22 01 025 A1 bekannt. Ohne ein Frontend an der Anlage ist es nicht möglich, den Dampf zu überhitzen. Für die Dampfüberhitzung steht hier nur die Abwärme aus der Ammoniaksynthese zur Verfügung, mit der die übliche Überhitzungstemperatur von in der Regel über etwa 500 °C nicht erreicht werden kann.

Die Aufgabe der vorliegenden Erfindung besteht darin, ein verbessertes Verfahren zur Herstellung von Ammoniak mit den eingangs genannten Merkmalen zur Verfügung zu stellen, bei dem auch ohne Vorhandensein eines Frontends, in dem die Erzeugung des benötigten Synthesegases erfolgt, die Herstellung von überhitztem Dampf möglich ist.

Die Lösung der vorgenannten Aufgabe liefert ein Verfahren zur Herstellung von Ammoniak der eingangs genannten Art mit den Merkmalen des Anspruchs 1.

Erfindungsgemäß wird das aus dem ersten Ammoniakkonverter austretende Produktgasgemisch erst durch einen Dampfüberhitzer und danach durch einen stromabwärts von diesem angeordneten Abhitzekessel geleitet, in dem Dampf produziert wird, bevor das Produktgasgemisch dem zweiten Ammoniakkonverter zugeführt wird.

Der bei der vorliegenden Erfindung verfolgte Lösungsansatz besteht darin, die Prozessparameter bei der Ammoniaksynthese so anzupassen, dass eine Dampfüberhitzung auch bei einer Ammoniakanlage ohne Frontend möglich ist. Dazu verwendet man zwei zwischen den beiden Ammoniakkonvertern angeordnete und in bevorzugt in Strömungsrichtung hintereinander (in Reihe) geschaltete Apparaturen, die das heiße Produktgasgemisch nacheinander durchströmt, bevor es in den zweiten Ammoniakkonverter gelangt, nämlich einen Dampfüberhitzer und einen Abhitzekessel. In dem letzteren wird der Dampf erzeugt und dann wird der Dampf (quasi entgegen der Strömungsrichtung des Produktgasgemisches) in den Dampfüberhitzer geleitet und dort überhitzt.

Im Dampfüberhitzer, welcher von den heißen Gasen durchströmt wird, unmittelbar nachdem diese aus dem ersten Ammoniakkonverter ausgetreten sind und somit ohne dass diese zwischenzeitlich abgekühlt werden, kann die für die Überhitzung des Dampfs notwendige Temperatur insbesondere dadurch erreicht werden, dass man die Reaktion im ersten Ammoniakkonverter so führt, dass eine höhere Austrittstemperatur des Produktgasgemisches erreicht wird, als dies bei vergleichbaren herkömmlichen Verfahren der Fall ist. Diese Austrittstemperatur beträgt bei Standardverfahren maximal etwa 470°C bis 480 °C.

Gemäß einer bevorzugten Weiterentwicklung des erfindungsgemäßen Verfahrens weist das Produktgasgemisch beim Austritt aus dem ersten Ammoniakkonverter eine Temperatur von mehr als 485 °C, vorzugsweise eine Temperatur von mehr als 490 °C, besonders bevorzugt eine Temperatur von wenigstens 495 °C auf. Die erhöhte Temperatur des Produktgasgemisches bei Austritt aus dem ersten Ammoniakkonverter kann man beispielsweise dadurch erreichen, dass man einen höheren prozentualen Umsatz der Eduktgase im ersten Ammoniakkonverter erzielt, was man wiederum beispielsweise dadurch erreichen kann, dass man die Menge an Katalysator im ersten Ammoniakkonverter gegenüber Standardverfahren erhöht.

Gemäß einer bevorzugten Weiterentwicklung des erfindungsgemäßen Verfahren umfasst der erste Ammoniakkonverter mindestens zwei Katalysatorbetten, die von dem Reaktionsgasgemisch nacheinander durchströmt werden. Eine Kühlung des Produktgasgemisches, welches das erste Katalysatorbett durchströmt hat, ist in der Regel sinnvoll, wobei dies durch einen Wärmetauscher erfolgen kann, der innerhalb des ersten Ammoniakkonverters und im Strömungsweg nach dem ersten Katalysatorbett angeordnet ist, so dass das im ersten Katalysatorbett erzeugte Produktgasgemisch vor dem Eintritt in das zweite Katalysatorbett abgekühlt wird. In ähnlicher Weise kann auch der zweite Ammoniakkonverter zwei Katalysatorbetten enthalten, die nacheinander durchströmt werden, wobei eine Kühlung durch einen Wärmetauscher nach dem ersten Katalysatorbett vorteilhaft ist.

Gemäß einer bevorzugten Weiterentwicklung des erfindungsgemäßen Verfahrens wird der in dem Dampfüberhitzer überhitzte Dampf als Antriebsdampf für mindestens eine Turbine verwendet. Da es sich in dem erfindungsgemäßen Verfahren bevorzugt um eine Ammoniakanlage ohne Frontend handelt, wird kein Dampf für die Dampfreformierung benötigt. Daher steht der überhitzte Dampf als Antriebsdampf zur Verfügung, wobei der Dampf in einer Turbine entspannt werden und beispielsweise für den Antrieb von Kompressoren genutzt werden kann, insbesondere für die Kompressoren, die man in der Anlage benötigt, um die Eduktgase Stickstoff und Wasserstoff auf den hohen Synthesedruck der Ammoniaksynthese von beispielsweise etwa 200 bar zu bringen.

Gemäß einer bevorzugten Weiterentwicklung des erfindungsgemäßen Verfahrens weist das Produktgasgemisch aus dem ersten Ammoniakkonverter nach dem Durchtritt durch den Dampfüberhitzer eine Temperatur von wenigstens 380 °C, vorzugsweise von wenigstens 400 °C, weiter vorzugsweise von wenigstens 420 °C, besonders bevorzugt von wenigstens 430 °C auf. Das Produktgasgemisch tritt mit einer um beispielsweise um 20 °C bis 30 °C höheren Temperatur aus dem ersten Ammoniakkonverter aus als bei herkömmlichen Verfahren, beispielsweise mit einer Temperatur von etwa 500 °C und kühlt sich dann beim Durchtritt durch den Dampfüberhitzer zunächst um beispielsweise 60 °C auf 440 °C ab. Somit erfolgt nach dem Durchtritt durch den Dampfüberhitzer zunächst eine erste teilweise Abkühlung und das Produktgasgemisch tritt nach dieser teilweisen Wärmeübertragung in den stromabwärts zum Dampfüberhitzer angeordneten Abhitzekessel mit einer noch vergleichsweise hohen Temperatur ein. Eine weitere Wärmeübertragung erfolgt dann im Abhitzekessel, wodurch dort Dampf erzeugt wird, welcher dann dem Dampfüberhitzer zugeleitet wird, wobei sich das Produktgasgemisch im Abhitzekessel weiter abkühlt und schließlich stromabwärts von diesem in den zweiten Ammoniakkonverter gelangt, in dem eine weitere Reaktion der im Produktgasgemisch enthaltenen, noch nicht umgesetzten Eduktgase zu weiterem Produktgas erfolgt.

Gemäß einer bevorzugten Weiterentwicklung des erfindungsgemäßen Verfahrens weist das Produktgasgemisch aus dem ersten Ammoniakkonverter nach dem Durchtritt durch den Abhitzekessel eine Temperatur von weniger als 360 °C, vorzugsweise von weniger als 340 °C auf. Beispielsweise liegt die Temperatur bei Eintritt in den zweiten Ammoniakkonverter bei etwa 330 °C. Eine Besonderheit der vorgenannten bevorzugten Variante des erfindungsgemäßen Verfahrens liegt somit darin, dass eine zweistufige Abkühlung des heißen Produktgasgemisches aus dem ersten Ammoniakkonverter vorgesehen ist, wobei die Abwärme des Prozessgases auf den Abhitzekessel und den zusätzlichen Dampfüberhitzer verteilt wird.

Gemäß einer bevorzugten Weiterentwicklung des erfindungsgemäßen Verfahrens wird in dem Abhitzekessel Dampf mit einer Temperatur von weniger als 320 °C, vorzugsweise mit einer Temperatur von weniger als 310 °C, besonders bevorzugt mit einer Temperatur von weniger als 300 °C erzeugt, welcher anschließend dem Dampfüberhitzer zugeführt und dort weiter erhitzt wird. Diese Verfahrensvariante beinhaltet eine weitere Besonderheit des erfindungsgemäßen Verfahrens, wonach die Verdampfungstemperatur im Vergleich zu herkömmlichen Verfahren herabgesetzt wird, beispielsweise um mehr als 20 °C, gegebenenfalls um mehr als 30 °C. Wenn man nun den Druck im Abhitzekessel, in dem der Dampf erzeugt wird, herabsetzt, sinkt auch die Verdampfungstemperatur entsprechend, wodurch es möglich wird, die Abwärme des aus dem ersten Ammoniakkonverter austretenden Produktgasgemisches auf den Abhitzekessel (Dampferzeuger) und den Dampfüberhitzer zu verteilen.

Gemäß einer bevorzugten Weiterentwicklung des erfindungsgemäßen Verfahrens wird in dem Dampfüberhitzer der diesem von dem Abhitzekessel zugeführte Dampf auf mindestens 420 °C, vorzugsweise auf mindestens 440 °C, weiter bevorzugt auf mindestens 460 °C weiter erhitzt.

Gemäß einer bevorzugten Weiterentwicklung des erfindungsgemäßen Verfahrens wird in dem Abhitzekessel Dampf mit einem Druck von weniger als 110 bara, vorzugsweise mit einem Druck von weniger als 90 bara, besonders bevorzugt mit einem Druck von weniger als 80 bara erzeugt, welcher vorzugsweise bei der obengenannten Temperatur als Sattdampf vorliegt. Durch diese Druckabsenkung bei der Dampferzeugung im Abhitzekessel kann Sattdampf, das heißt Dampf, welcher bei diesem Druck nur wenig oberhalb der Siedetemperatur vorliegt, bei einer niedrigeren Temperatur erzeugt werden.

Gemäß einer bevorzugten Weiterentwicklung des erfindungsgemäßen Verfahrens wird der in dem Abhitzekessel erzeugte Dampf im Dampfüberhitzer weiter erhitzt. Dabei ist eine nicht unerhebliche weitere Erhöhung der Dampftemperatur im Dampfüberhitzer möglich und somit die Aufnahme eines wesentlichen Anteils der im Produktgasgemisch aus dem ersten Ammoniakkonverter enthaltenen Abwärme zur Dampferzeugung im Dampfüberhitzer.

Gemäß einer bevorzugten Weiterentwicklung des erfindungsgemäßen Verfahrens umfasst der erste Ammoniakkonverter mindestens zwei Katalysatorbetten, die das Reaktionsgasgemisch nacheinander durchströmt, wobei das Reaktionsgasgemisch nach dem Durchströmen des ersten Katalysatorbettes mittels eines im Ammoniakkonverter angeordneten Wärmetauschers gekühlt wird, wobei weiterhin bevorzugt nach dem Durchströmen des zweiten Katalysatorbettes im ersten Ammoniakkonverter keine weitere Kühlung des Produktgasgemisches vorgesehen ist, sondern das Produktgasgemisch ohne weitere Kühlung dem Dampfüberhitzer zugeführt wird.

Gemäß einer bevorzugten Weiterentwicklung des erfindungsgemäßen Verfahrens ist stromabwärts des zweiten Ammoniakkonverters ein weiterer Abhitzekessel angeordnet, in dem mittels der Wärme des aus dem zweiten Ammoniakkonverter austretenden Produktgasgemisches weiterer Dampf erzeugt wird, wobei dieser Dampf einer vom ersten Abhitzekessel ausgehenden Dampfleitung zugeführt, dort mit dem im ersten Abhitzekessel erzeugten Dampf vereint und anschließend dem Dampfüberhitzer zugeführt wird. Bei dieser Verfahrensvariante kann dem Dampfüberhitzer eine größere Dampfmenge zugeführt werden, da auch der mittels der Abwärme des zweiten Ammoniakkonverters im zweiten Abhitzekessel erzeugte Dampf im Dampfüberhitzer überhitzt wird.

Gemäß einer bevorzugten Weiterentwicklung des erfindungsgemäßen Verfahrens werden dem ersten Ammoniakkonverter als frische Eduktgase reiner Stickstoff und reiner Wasserstoff zugeführt, welche nicht in einem der Anlage zur Herstellung von Ammoniak zugeordneten Frontend durch Reformierung erzeugt wurden. Unter dem hier verwendeten Begriff "reiner" Stickstoff bzw. "reiner" Wasserstoff wird verstanden, dass diese Eduktgase vorzugsweise in einem solchen Reinheitsgrad bereitgestellt werden können, dass diese Eduktgase (Frischgas) in der Ammoniaksynthese eingesetzt werden können. Im Kreislauf kommt es zu keiner Anreicherung von Inerten, da die eingetragenen und die ausgetragenen Inerte sich etwa die Waage halten.

Gegenstand der vorliegenden Erfindung ist weiterhin eine Anlage zur Herstellung von Ammoniak, insbesondere zur Verwendung in dem oben beschriebenen Verfahren, umfassend einen ersten Ammoniakkonverter enthaltend mindestens ein Katalysatorbett, weiter umfassend einen zweiten Ammoniakkonverter enthaltend ebenfalls mindestens ein Katalysatorbett, wobei im Leitungsweg des nach Austritt aus dem ersten Ammoniakkonverter zum zweiten Ammoniakkonverter strömenden Produktgasgemisches mindestens ein Abhitzekessel angeordnet ist, wobei erfindungsgemäß die Anlage weiterhin wenigstens einen Dampfüberhitzer umfasst, welcher im Strömungsweg des Produktgasgemisches stromabwärts der ersten Ammoniakkonverters, stromaufwärts des Abhitzekessels und zwischen dem ersten Ammoniakkonverter und dem zweiten Ammoniakkonverter angeordnet ist .

Gemäß einer bevorzugten Weiterbildung der vorliegenden Erfindung umfasst diese Anlage vorzugsweise weiterhin wenigstens eine Dampfleitung für in dem Abhitzekessel erzeugten Dampf, welche vom Dampfausgang des Abhitzekessels zum Dampfeingang des Dampfüberhitzers führt.

Gemäß einer bevorzugten Weiterbildung der vorliegenden Erfindung umfasst diese Anlage wenigstens eine Turbine für den Antrieb wenigstens eines Kompressors und es ist wenigstens eine vom Dampfausgang des Dampfüberhitzers ausgehende Leitung für überhitzten Dampf vorgesehen, welche zur Antriebsseite der Turbine führt.

Gemäß einer bevorzugten Weiterbildung der vorliegenden Erfindung umfasst diese Anlage wenigstens einen zweiten Abhitzekessel, welcher im Strömungsweg des Produktgasgemisches stromabwärts des zweiten Ammoniakkonverters angeordnet ist, wobei vom Dampfausgang des zweiten Abhitzekessels eine Dampfleitung abgeht, welche in die vom ersten Abhitzekessel zum Dampfüberhitzer führende Dampfleitung einmündet.

Gemäß einer bevorzugten Weiterbildung der vorliegenden Erfindung umfasst diese Anlage Mittel zur Bereitstellung von reinem Stickstoff und reinem Wasserstoff für die Reaktion in den Ammoniakkonvertern, wobei die Anlage kein Frontend zur Erzeugung von Synthesegas durch Reformierung umfasst. Die beiden Eduktgase Stickstoff und Wasserstoff für die Ammoniaksynthese werden somit nicht in einem Frontend der Anlage erzeugt. Jedoch kann der Wasserstoff grundsätzlich aus Erdgas oder einem anderen kohlenwasserstoffhaltigen Einsatzgasstrom durch Dampfreformierung erzeugt werden, allerdings in einer anderen Anlage. Alternativ können Stickstoff und Wasserstoff aus anderen geeigneten Quellen bereitgestellt werden. Wesentlich ist nur, dass Stickstoff und Wasserstoff am Ort der Anlage in ausreichender Reinheit verfügbar sind. Aus diesem Grunde kommt eine Dampfüberhitzung im Frontend hier nicht in Betracht und folglich wurde die erfindungsgemäße Anlagenverschaltung zur Erzeugung von überhitztem Dampf gewählt.

Gemäß einer bevorzugten Weiterbildung der vorliegenden Erfindung sind bei dieser Anlage in dem ersten Ammoniakkonverter wenigstens zwei Katalysatorbetten angeordnet und/oder in dem zweiten Ammoniakkonverter wenigstens zwei Katalysatorbetten angeordnet, wobei vorzugsweise innerhalb des ersten Ammoniakkonverters und/oder innerhalb des zweiten Ammoniakkonverters jeweils mindestens ein Wärmetauscher angeordnet ist, welcher jeweils dem ersten Katalysatorbett in diesem Ammoniakkonverter zugeordnet ist, wobei dem jeweils zweiten Katalysatorbett des jeweiligen Ammoniakkonverters jeweils kein Wärmetauscher zugeordnet ist. Bei dieser bevorzugten Konfiguration der erfindungsgemäßen Anlage sind somit wenigstens zwei Ammoniakkonverter mit jeweils mindestens zwei Katalysatorbetten, das heißt insgesamt wenigstens vier Katalysatorbetten vorhanden. Ein oder beide Ammoniakkonverter können auch jeweils drei oder mehr Katalysatorbetten enthalten. Die fehlende Kühlung des zweiten oder jeweils im Strömungsweg letzten, ausgangsseitigen Katalysatorbettes in dem jeweiligen Ammoniakkonverter führt aufgrund der exothermen Reaktion zu einer vergleichsweise hohen Austrittstemperatur des Produktgasgemisches aus dem Ammoniakkonverter und entsprechend hoher Eintrittstemperatur in den Dampfüberhitzer, was bei der erfindungsgemäßen Anlage vorteilhaft ist.

Nachfolgend wird die vorliegende Erfindung anhand eines Ausführungsbeispiels unter Bezugnahme auf die beiliegende Zeichnung näher beschrieben. Dabei zeigt:

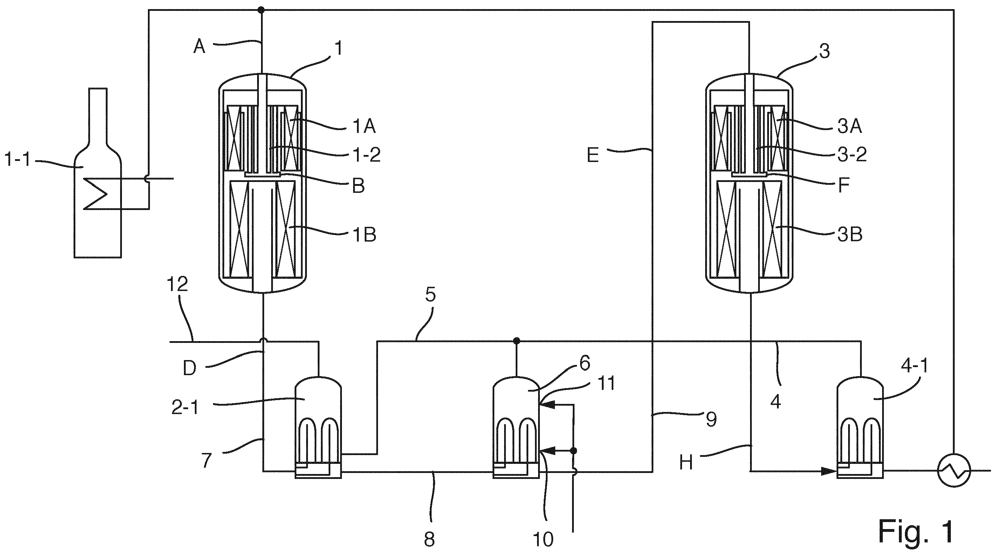

Figur 1 ein vereinfachtes Anlagenschema einer beispielhaften erfindungsgemäßen Anlage zur Herstellung von Ammoniak.

Nachfolgend wird auf die Figur 1 Bezug genommen und anhand dieser wird eine beispielhafte Ausführungsvariante des erfindungsgemäßen Verfahrens näher erläutert. Die Darstellung gemäß Figur 1 ist schematisch stark vereinfacht und es sind nur diejenigen Anlagenkomponenten dargestellt, die im Rahmen der vorliegenden Erfindung von Bedeutung sind. Die Anlage umfasst zwei Ammoniakkonverter 1, 3, welche beide jeweils zwei Katalysatorbetten 1 A bzw. 3 A enthalten, so dass die Anlage insgesamt vier Katalysatorbetten umfasst. Ein frisches Synthesegas A umfassend Stickstoff und Wasserstoff als Edukte in für die Ammoniaksynthese geeignetem stöchiometrischen Verhältnis von 1:3 und gegebenenfalls inerte Komponenten wird in den ersten Ammoniakkonverter 1 eingeleitet, welcher ein erstes Katalysatorbett 1 A und ein zweites Katalysatorbett 1 B sowie einen ersten internen Wärmetauscher 1-2 umfasst. Bevor das frische Synthesegas A in den ersten Ammoniakkonverter 1 gelangt, kann dieses optional noch einen in der Zuleitung vorgeschalteten Vorwärmetauscher 1-1 durchströmen, welcher in der Regel nur zum Anfahren der Anlage genutzt wird. Danach wird das frische Synthesegas A in dem ersten Ammoniakkonverter 1 in dem ersten Wärmetauscher 1-2 vorgewärmt. Anschließend wird das vorgewärmte frische Synthesegas A über das erste Katalysatorbett 1 A geleitet unter Bildung eines Synthesegases B umfassend Produktgas und nicht umgesetzte Eduktgase.

Wie man in Figur 1 erkennen kann, ist der erste Wärmetauscher 1-2 so angeordnet, dass er radial innen innerhalb des ersten Katalysatorbetts 1 A liegt. Mit anderen Worten, das Katalysatorbett 1 A ist ringförmig ausgebildet, befindet sich in der ersten Reaktionsvorrichtung 1 radial außenliegend und umgibt den ersten Wärmetauscher 1-2 ringförmig. Das erste Katalysatorbett 1 A und der konzentrisch innerhalb dieses liegende Wärmetauscher 1-2 haben in etwa die gleiche axiale Länge und erstrecken sich beide jeweils nur über einen oberen Teil der axialen Länge des ersten Ammoniakkonverters 1.

Im Detail ist der Strömungsweg des frischen Synthesegases A im ersten Ammoniakkonverter 1 wie folgt. Zunächst gelangt das frische Synthesegas A in ein gerades Rohr des ersten Wärmetauschers 1-2, welches sich mittig etwa in Achsrichtung im oberen Bereich in der ersten Reaktionsvorrichtung 1 erstreckt und von dem frischen Synthesegas A von oben nach unten durchströmt wird. Am unteren Ende erfolgt eine Umkehr der Strömungsrichtung und das frische Synthesegas strömt durch die Rohre im ersten Wärmetauscher 1-2 wieder nach oben, wo es dann oberhalb des ersten Wärmetauschers in Richtung der Pfeile radial nach außen strömt, um dann das erste Katalysatorbett 1 A von radial außen nach radial innen zu durchströmen, wobei die katalytische Reaktion stattfindet. Danach strömt das Synthesegas, welches sich durch die Reaktion erwärmt hat, in den radial innen liegenden ersten Wärmetauscher 1-2 ein. Hierbei wird das Synthesegas so geleitet, dass der Wärmetauscher von oben nach unten durchströmt wird, wobei es sich abkühlt, da ein Wärmetausch mit dem ebenfalls den ersten Wärmetauscher durchströmenden kühleren frischen Synthesegas A stattfindet. Dann verlässt das Synthesegas den ersten Wärmetauscher 1-2 am unteren Ende, um unterhalb des ersten Wärmetauschers wieder radial nach außen zu strömen.

Dadurch erfolgt der Eintritt in das zweite Katalysatorbett 1 B, welches stromabwärts zu dem ersten Katalysatorbett 1 A in der ersten Reaktionsvorrichtung 1 angeordnet ist, wieder von radial außen her in Richtung der Pfeile. Das in dem ersten Wärmetauscher 1-2 abgekühlte Synthesegas B strömt dann radial von außen nach innen in Richtung der horizontalen Pfeile durch das zweite Katalysatorbett 1 B unter Bildung eines Synthesegases D umfassend Produktgas und nicht umgesetzte Eduktgase. Im radial inneren Bereich erfolgt im oberen Bereich des zweiten Katalysatorbetts 1 B eine Umlenkung der horizontalen Strömung in eine vertikale Strömung, so dass das Synthesegas D nach der Reaktion im zweiten Katalysatorbett 1 B in axialer Richtung nach unten strömt und am unteren Ende aus dem ersten Ammoniakkonverter 1 austritt. Dem zweiten Katalysatorbett 1 B ist innerhalb des ersten Ammoniakkonverters 1 kein weiterer Wärmetauscher zugeordnet, so dass das zweite Katalysatorbett 1 B eine größere radiale Ausdehnung aufweisen kann als das erste Katalysatorbett und entsprechend mehr Volumen für die Reaktion im zweiten Katalysatorbett 1 B zur Verfügung steht.

Nach dem Ausleiten aus dem ersten Ammoniakkonverter 1 wird zumindest ein Teil des Synthesegases D durch den Dampfüberhitzer 2-1 geleitet und dabei gekühlt, wobei gleichzeitig mittels der Abwärme aus dem ersten Ammoniakkonverter 1 der durch die Leitung 5 in den Dampfüberhitzer 2-1 eingeleitete heiße Dampf aus dem Abhitzekessel 6 im Dampfüberhitzer 2-1 überhitzt wird.

Stromabwärts des Dampfüberhitzers 2-1 ist im Leitungsweg der Leitungen 8, 9 vom ersten Ammoniakkonverter 1 zum zweiten Ammoniakkonverter 3 der Abhitzekessel 6 angeordnet, welcher somit zwischen dem Dampfüberhitzer 2-1 und dem zweiten Ammoniakkonverter 3 positioniert ist. Somit strömt das im Dampfüberhitzer 2-1 beispielsweise um 60 °C von 500 °C auf 440 °C abgekühlte Produktgasgemisch vom Dampfüberhitzer 2-1 über die Leitung 8 zum Eingang des Abhitzekessels 6 wo das Produktgasgemisch eine weitere Abkühlung um beispielsweise 110 °C auf 330 °C erfährt, um dann vom Ausgang des Abhitzekessels 6 über die Leitung 9 zum zweiten Ammoniakkonverter 3 zu strömen, in dem eine weitere Umsetzung der Eduktgase Stickstoff und Wasserstoff zu Ammoniak erfolgt.

In den Abhitzekessel 6 strömt über die beiden Leitungen 10, 11 Wasser ein, aus dem im Abhitzekessel 6 Dampf erzeugt wird, wobei zum Beispiel Dampf bei einem Druck von 75 bar und einer Temperatur von 290 °C erzeugt wird. Der Druck und die Temperatur des erzeugten Dampfs, bei dem es sich vorzugsweise um Sattdampf handelt, liegen somit um einiges niedriger als bei vergleichbaren aus dem Stand der Technik bekannten Anlagen. Bei herkömmlichen Ammoniakanlagen verwendet man standardmäßig einen Druck in der Größenordnung von 115 bara, so dass man für die Erzeugung von überhitztem Dampf eine Temperatur von 535 °C benötigt, die sich am Ausgang des ersten Ammoniakkonverters 1 nicht erreichen lässt.

Bei der vorliegenden Erfindung wird der im Abhitzekessel 6 erzeugte Dampf vom Ausgang des Abhitzekessels 6 über die Leitung 5 zum Eingang des Dampfüberhitzers 2-1 geleitet, wobei der Dampf dort durch die über die Leitung 7 in den Dampfüberhitzer 2-1 eingeleiteten heißen Produktgase aus dem ersten Ammoniakkonverter 1 überhitzt wird, beispielsweise auf eine Temperatur von 470 °C, wobei der Druck des Dampfs etwa in der gleichen Größenordnung liegt wie am Ausgang des Abhitzekessels 6, lediglich etwas niedriger aufgrund von geringfügigen Druckverlusten im Leitungsweg und in den Aggregaten der Anlage, beispielsweise im Dampfüberhitzer selbst. Somit wird hier Dampf mit einer Temperatur von beispielsweise nur 470 °C und einem Druck von beispielsweise etwa 70 bar erzeugt und über die vom Ausgang des Dampfüberhitzers 2-1 ausgehende Dampfleitung 12 weitergeleitet, beispielsweise zu einer in der Zeichnung nicht dargestellten Turbine geleitet, wo der Dampf als Antriebsdampf verwendet werden kann.

Das im Abhitzekessel 6 abgekühlte Synthesegas E wird anschließend über die Leitung 9 in einen zweiten Ammoniakkonverter 3 eingeleitet, welcher ein drittes Katalysatorbett 3 A und ein viertes Katalysatorbett 3 B sowie einen dritten Wärmetauscher 3-2 umfasst. Zunächst wird das Synthesegas E in dem dritten Wärmetauscher 3-2 gewärmt. Anschließend wird das gewärmte Synthesegas E über das dritte Katalysatorbett 3 A geleitet unter Bildung eines Synthesegases F umfassend Produkt und nicht umgesetzte Reaktanden. Der Aufbau des dritten Katalysatorbetts 3 A und des diesem zugeordneten zweiten internen Wärmetauschers 3-2 sind im Prinzip analog zu den Verhältnissen bezüglich des ersten Katalysatorbetts 1 A und des diesem zugeordneten ersten Wärmetauschers 1-2. Dies gilt ebenso für die räumliche Anordnung und die Strömungsverhältnisse des Synthesegases wie sie bereits oben erläutert wurden. Der dritte Wärmetauscher 3-2 liegt somit konzentrisch innerhalb des dritten Katalysatorbetts 3 A und wird von dem Synthesegas E zweimal durchströmt, nämlich zum einen beim Eintritt des Synthesegases E in den zweiten Ammoniakkonverter 3 zu dessen Erwärmung und außerdem nach der Reaktion im dritten Katalysatorbett zur Abkühlung, um die bei der Reaktion im Katalysatorbett entstehende Wärme abzuführen.

Das Synthesegas F wird nach dem Austritt aus dem dritten Wärmetauscher 3-2 und der dortigen Abkühlung anschließend über das vierte Katalysatorbett 3 B geleitet, unter Bildung eines Synthesegases H umfassend Produkt und nicht umgesetzte Reaktanden. Dem vierten Katalysatorbett 3 B ist ebenso wie bei dem zweiten Katalysatorbett 1 B kein weiterer Wärmetauscher innerhalb des zweiten Ammoniakkonverters 3 direkt zugeordnet und es hat daher eine größere radiale Ausdehnung als das dritte Katalysatorbett 3 A. Die Anordnung und die Strömungsverhältnisse entsprechen denjenigen wie zuvor bei dem zweiten Katalysatorbett 1-B beschrieben und das Synthesegas H verlässt den zweiten Ammoniakkonverter 3 in axialer Richtung am unteren Ende wie durch den Pfeil in Figur 1 angedeutet.

Nach dem Ausleiten aus dem zweiten Ammoniakkonverter 3 wird zumindest ein Teil des Synthesegases H über einen weiteren Abhitzekessel 4-1 geleitet und dabei gekühlt. Der weitere Abhitzekessel 4-1 wird vorzugsweise von einem Kesselspeisewasser durchströmt, welches zuvor temperiert wurde. In dem weiteren Abhitzekessel 4-1 wird Wärme von dem Synthesegas H auf das Kesselspeisewasser unter Bildung von weiterem Hochdruckdampf übertragen. Dieser im weiteren Abhitzekessel 4-1 erzeugte weitere Dampf kann über die Leitung 4 der Leitung 5 zugeführt werden, so dass dieser weitere Dampf mit dem im ersten Abhitzekessel 6 erzeugten Dampf vereint und danach über die Leitung 5 dem Dampfüberhitzer 2-1 zugeführt werden kann.

### Bezugszeichenliste

- 1: erster Ammoniakkonverter
- 1 A: erstes Katalysatorbett
- 1 B: zweites Katalysatorbett
- 1-1: vorgeschalteter Vorwärmetauscher, beim Starten der Anlage genutzt
- 1-2: Wärmetauscher (intern)
- 2-1: Dampfüberhitzer
- 3: zweiter Ammoniakkonverter
- 3 A: drittes Katalysatorbett
- 3 B: viertes Katalysatorbett
- 3-2: zweiter interner Wärmetauscher
- 4: Leitung für Dampf
- 4-1: zweiter Abhitzekessel
- 5: Leitung für Dampf
- 6: erster Abhitzekessel
- 7: Leitung für heißes Produktgasgemisch
- 8: Leitung für heißes Produktgasgemisch
- 9: Leitung für Produktgasgemisch
- 10: Leitung für Wasser
- 11: Leitung für Wasser
- 12: Dampfleitung für überhitzten Dampf
- A: frisches Synthesegas
- B: abgekühltes Synthesegas
- D: Synthesegas
- E: abgekühltes Synthesegas
- F: Synthesegas
- H: Synthesegas

## Patentansprüche

1. Verfahren zur Herstellung von Ammoniak, bei dem die Eduktgase Stickstoff und Wasserstoff in einem ersten Ammoniakkonverter (1) umgesetzt werden, welcher mindestens ein Katalysatorbett (1 A, 1 B) umfasst, wobei das aus dem ersten Ammoniakkonverter austretende Produktgasgemisch durch wenigstens einen Abhitzekessel (6) geleitet und gekühlt wird, wobei Dampf erzeugt wird, wobei das Produktgasgemisch danach stromabwärts des Abhitzekessels (6) einem zweiten Ammoniakkonverter (3) zugeführt wird, welcher ebenfalls mindestens ein Katalysatorbett (3 A, 3 B) umfasst, **dadurch gekennzeichnet, dass** das aus dem ersten Ammoniakkonverter (1) austretende Produktgasgemisch (D) erst durch einen Dampfüberhitzer (2-1) und danach durch einen stromabwärts von diesem angeordneten Abhitzekessel (6) geleitet wird, in dem Dampf produziert wird, bevor das Produktgasgemisch (E) dem zweiten Ammoniakkonverter (3) zugeführt wird.

2. Verfahren nach Anspruch 1, **dadurch gekennzeichnet, dass** der in dem Abhitzekessel (6) erzeugte Dampf anschließend dem Dampfüberhitzer (2-1) zugeführt und in diesem weiter erhitzt wird.

3. Verfahren nach Anspruch 2, **dadurch gekennzeichnet, dass** der in dem Dampfüberhitzer (2-1) überhitzte Dampf als Antriebsdampf für mindestens eine Turbine verwendet wird.

4. Verfahren nach einem der Ansprüche 1 bis 3, **dadurch gekennzeichnet, dass** das Produktgasgemisch (D) beim Austritt aus dem ersten Ammoniakkonverter (1) eine Temperatur von mehr als 485 °C, vorzugsweise eine Temperatur von mehr als 490 °C, besonders bevorzugt eine Temperatur von wenigstens 495 °C aufweist.

5. Verfahren nach einem der Ansprüche 1 bis 4, **dadurch gekennzeichnet, dass** das Produktgasgemisch aus dem ersten Ammoniakkonverter (1) nach dem Durchtritt durch den Dampfüberhitzer (2-1) eine Temperatur von wenigstens 380 °C, vorzugsweise von wenigstens 400 °C, weiter vorzugsweise von wenigstens 420 °C, besonders bevorzugt von wenigstens 430 °C aufweist.

6. Verfahren nach einem der Ansprüche 1 bis 5, **dadurch gekennzeichnet, dass** das Produktgasgemisch (E) aus dem ersten Ammoniakkonverter (1) nach dem Durchtritt durch den Abhitzekessel (6) eine Temperatur von weniger als 360 °C, vorzugsweise von weniger als 340 °C aufweist.

7. Verfahren nach einem der Ansprüche 2 bis 6, **dadurch gekennzeichnet, dass** in dem Abhitzekessel (6) Dampf mit einer Temperatur von weniger als 320 °C, vorzugsweise mit einer Temperatur von weniger als 310 °C, besonders bevorzugt mit einer Temperatur von weniger als 300 °C erzeugt wird, welcher anschließend dem Dampfüberhitzer (2-1) zugeführt und dort weiter erhitzt wird.

8. Verfahren nach einem der Ansprüche 2 bis 7, **dadurch gekennzeichnet, dass** in dem Dampfüberhitzer (2-1) der diesem von dem Abhitzekessel (6) zugeführte Dampf auf mindestens 420 °C, vorzugsweise auf mindestens 440 °C, weiter bevorzugt auf mindestens 460 °C weiter erhitzt wird.

9. Verfahren nach einem der Ansprüche 7 oder 8, **dadurch gekennzeichnet, dass** in dem Abhitzekessel (6) Dampf mit einem Druck von weniger als 110 bara, vorzugsweise mit einem Druck von weniger als 90 bara, besonders bevorzugt mit einem Druck von weniger als 80 bara erzeugt wird, welcher vorzugsweise bei der in Anspruch 7 genannten Temperatur als Sattdampf vorliegt.

10. Verfahren nach Anspruch 4 oder einem der auf Anspruch 4 rückbezogenen Ansprüche 5 bis 9, **dadurch gekennzeichnet, dass** der erste Ammoniakkonverter (1) mindestens zwei Katalysatorbetten (1 A, 1 B) umfasst, die das Reaktionsgasgemisch nacheinander durchströmt, wobei die erhöhte Temperatur des Produktgasgemisches (D) beim Austritt aus dem ersten Ammoniakkonverter (1) durch einen höheren prozentualen Umsatz der Eduktgase mittels Verwendung einer gegenüber Standardverfahren erhöhten Menge an Katalysator im ersten Ammoniakkonverter (1) erzielt wird.

11. Verfahren nach einem der Ansprüche 1 bis 10, **dadurch gekennzeichnet, dass** der erste Ammoniakkonverter (1) mindestens zwei Katalysatorbetten (1 A, 1 B) umfasst, die das Reaktionsgasgemisch nacheinander durchströmt, wobei das Reaktionsgasgemisch nach dem Durchströmen des ersten Katalysatorbettes mittels eines im Ammoniakkonverter angeordneten Wärmetauschers (1-2) gekühlt wird, wobei nach dem Durchströmen des zweiten Katalysatorbettes (1 B) im ersten Ammoniakkonverter (1) keine Kühlung des Produktgasgemisches vorgesehen ist und das Produktgasgemisch ohne weitere Kühlung dem Dampfüberhitzer (2-1) zugeführt wird.

12. Verfahren nach einem der Ansprüche 1 bis 11, **dadurch gekennzeichnet, dass** stromabwärts des zweiten Ammoniakkonverters (3) ein weiterer Abhitzekessel (4-1) angeordnet ist, in dem mittels der Wärme des aus dem zweiten Ammoniakkonverter (3) austretenden Produktgasgemisches weiterer Dampf erzeugt wird, wobei dieser Dampf einer vom ersten Abhitzekessel (6) ausgehenden Dampfleitung zugeführt, dort mit dem im ersten Abhitzekessel (6) erzeugten Dampf vereint und anschließend dem Dampfüberhitzer (2-1) zugeführt wird.

13. Verfahren nach einem der Ansprüche 1 bis 12, **dadurch gekennzeichnet, dass** dem ersten Ammoniakkonverter (1) als frische Eduktgase reiner Stickstoff und reiner Wasserstoff zugeführt werden, welche nicht in einem der Anlage zur Herstellung von Ammoniak zugeordneten Frontend durch Reformierung erzeugt wurden.

14. Anlage zur Herstellung von Ammoniak, insbesondere zur Verwendung in einem Verfahren nach einem der Ansprüche 1 bis 13, umfassend einen ersten Ammoniakkonverter (1) enthaltend mindestens ein Katalysatorbett (1 A, 1 B), weiter umfassend einen zweiten Ammoniakkonverter (3) enthaltend ebenfalls mindestens ein Katalysatorbett (3 A, 3 B), wobei im Leitungsweg des nach Austritt aus dem ersten Ammoniakkonverter (1) zum zweiten Ammoniakkonverter (3) strömenden Produktgasgemisches mindestens ein Abhitzekessel (6) angeordnet ist, **dadurch gekennzeichnet, dass** die Anlage weiterhin wenigstens einen Dampfüberhitzer (2-1) umfasst, welcher im Strömungsweg des Produktgasgemisches stromabwärts der ersten Ammoniakkonverters (1), stromaufwärts des Abhitzekessels (6) und zwischen dem ersten Ammoniakkonverter (1) und dem zweiten Ammoniakkonverter (3) angeordnet ist.

15. Anlage nach Anspruch 14, **dadurch gekennzeichnet, dass** diese weiterhin wenigstens eine Dampfleitung (5) für in dem Abhitzekessel (6) erzeugten Dampf umfasst, welche vom Dampfausgang des Abhitzekessels (6) zum Dampfeingang des Dampfüberhitzers (2-1) führt.

16. Anlage nach einem der Ansprüche 14 oder 15, **dadurch gekennzeichnet, dass** diese wenigstens eine Turbine für den Antrieb wenigstens eines Kompressors umfasst und wenigstens eine vom Dampfausgang des Dampfüberhitzers (2-1) ausgehende Leitung (12) für überhitzten Dampf vorgesehen ist, welche zur Antriebsseite der Turbine führt.

17. Anlage nach einem der Ansprüche 14 bis 16, **dadurch gekennzeichnet, dass** diese wenigstens einen zweiten Abhitzekessel (4-1) umfasst, welcher im Strömungsweg des Produktgasgemisches stromabwärts des zweiten Ammoniakkonverters (3) angeordnet ist, wobei vom Dampfausgang des zweiten Abhitzekessels (4-1) eine Dampfleitung (4) abgeht, welche in die vom ersten Abhitzekessel (6) zum Dampfüberhitzer (2-1) führende Dampfleitung (5) einmündet.

18. Anlage nach einem der Ansprüche 14 bis 17, **dadurch gekennzeichnet, dass** diese Mittel zur Bereitstellung von reinem Stickstoff und reinem Wasserstoff für die Reaktion in den Ammoniakkonvertern (1, 3) umfasst, wobei die Anlage kein Frontend zur Erzeugung von Synthesegas durch Reformierung umfasst.

19. Anlage nach einem der Ansprüche 14 bis 18, **dadurch gekennzeichnet, dass** in dem ersten Ammoniakkonverter (1) wenigstens zwei Katalysatorbetten (1 A, 1 B) angeordnet sind und/oder in dem zweiten Ammoniakkonverter (3) wenigstens zwei Katalysatorbetten (3 A, 3 B) angeordnet sind, wobei vorzugsweise innerhalb des ersten Ammoniakkonverters (1) und/oder innerhalb des zweiten Ammoniakkonverters (3) jeweils mindestens ein Wärmetauscher (1-2, 3-2) angeordnet ist, welcher jeweils dem ersten Katalysatorbett (1 A, 3 A) in diesem Ammoniakkonverter zugeordnet ist, wobei dem jeweils zweiten Katalysatorbett (1 B, 3 B) des jeweiligen Ammoniakkonverters jeweils kein Wärmetauscher zugeordnet ist.

## Claims

1. Process for the production of ammonia, in which the starting gases nitrogen and hydrogen are reacted in a first ammonia converter (1) which comprises at least one catalyst bed (1A, 1B), wherein the product gas mixture emerging from the first ammonia converter is passed through at least one waste heat boiler (6) and cooled, wherein steam is generated, wherein the product gas mixture is then fed downstream of the waste heat boiler (6) to a second ammonia converter (3) which also comprises at least one catalyst bed (3 A, 3 B) , **characterized in that** the product gas mixture (D) leaving the first ammonia converter (1) is first passed through a steam superheater (2-1) and then through a waste heat boiler (6) arranged downstream thereof, in which steam is produced, before the product gas mixture (E) is fed to the second ammonia converter (3).

2. Process according to claim 1, **characterized in that** the steam generated in the waste heat boiler (6) is then fed to the steam superheater (2-1) and further heated therein.

3. Process according to claim 2, **characterized in that** the steam superheated in the steam superheater (2-1) is used as driving steam for at least one turbine.

4. Process according to one of claims 1 to 3, **characterized in that** the product gas mixture (D) has a temperature of more than 485°C, preferably a temperature of more than 490°C, particularly preferably a temperature of at least 495°C, upon leaving the first ammonia converter (1).

5. Process according to one of claims 1 to 4, **characterized in that** the product gas mixture from the first ammonia converter (1) has a temperature of at least 380 °C, preferably at least 400 °C, and more preferably at least 420 °C, after passing through the steam superheater (2-1) particularly preferably at least 430 °C.

6. Process according to one of claims 1 to 5, **characterized in that** the product gas mixture (E) from the first ammonia converter (1) has a temperature of less than 360°C, preferably less than 340°C, after passing through the waste heat boiler (6).

7. Process according to one of claims 2 to 6, **characterized in that** steam with a temperature of less than 320°C, preferably with a temperature of less than 310°C, particularly preferably with a temperature of less than 300°C, is generated in the waste heat boiler (6) and is then fed to the steam superheater (2-1) and further heated there.

8. Process according to one of claims 2 to 7, **characterized in that** in the steam superheater (2-1), the steam supplied to it from the waste heat boiler (6) is further heated to at least 420 °C, preferably to at least 440 °C, and more preferably to at least 460 °C.

9. Process according to one of claims 7 or 8, **characterized in that** steam is generated in the waste heat boiler (6) at a pressure of less than 110 bara, preferably at a pressure of less than 90 bara, particularly preferably at a pressure of less than 80 bara, which is preferably present as saturated steam at the temperature mentioned in claim 7.

10. Process according to claim 4 or one of claims 5 to 9 referring back to claim 4, **characterized in that** the first ammonia converter (1) comprises at least two catalyst beds (1A, 1B) through which the reaction gas mixture flows in succession, wherein the elevated temperature of the product gas mixture (D) upon exiting the first ammonia converter (1) is achieved by a higher percentage conversion of the reactant gases through the use of an increased amount of catalyst in the first ammonia converter (1) compared to standard processes.

11. Process according to one of claims 1 to 10, **characterized in that** the first ammonia converter (1) comprises at least two catalyst beds (1A, 1B) through which the reaction gas mixture flows in succession, wherein the reaction gas mixture is cooled after flowing through the first catalyst bed by means of a heat exchanger (1-2) arranged in the ammonia converter, wherein no cooling of the product gas mixture is provided after it has passed through the second catalyst bed (1 B) in the first ammonia converter (1) and the product gas mixture is fed to the steam superheater (2-1) without further cooling.

12. Process according to one of claims 1 to 11, **characterized in that** a further waste heat boiler (4-1) is arranged downstream of the second ammonia converter (3), in which further steam is generated by means of the heat from the product gas mixture emerging from the second ammonia converter (3), wherein this steam is fed to a steam line leading from the first waste heat boiler (6), combined there with the steam generated in the first waste heat boiler (6) and then fed to the steam superheater (2-1).

13. Process according to one of claims 1 to 12, **characterized in that** pure nitrogen and pure hydrogen are supplied to the first ammonia converter (1) as fresh reactants, which have not been produced by reforming in a front end assigned to the ammonia production plant.

14. Plant for producing ammonia, in particular for use in a process according to one of claims 1 to 13, comprising a first ammonia converter (1) containing at least one catalyst bed (1A, 1B), further comprising a second ammonia converter (3) also containing at least one catalyst bed (3A, 3B), wherein at least one waste heat boiler (6) is arranged in the flow path of the product gas mixture flowing from the first ammonia converter (1) to the second ammonia converter (3), **characterized in that** the plant further comprises at least one steam superheater (2-1) which is arranged in the flow path of the product gas mixture downstream of the first ammonia converter (1), upstream of the waste heat boiler (6) and between the first ammonia converter (1) and the second ammonia converter (3).

15. Plant according to claim 14, **characterized in that** it further comprises at least one steam pipe (5) for steam generated in the waste heat boiler (6), which leads from the steam outlet of the waste heat boiler (6) to the steam inlet of the steam superheater (2-1).

16. Plant according to one of claims 14 or 15, **characterized in that** it comprises at least one turbine for driving at least one compressor, and at least one line (12) for superheated steam is provided, which extends from the steam outlet of the steam superheater (2-1) and leads to the drive side of the turbine.

17. Plant according to one of claims 14 to 16, **characterized in that** it comprises at least one second waste heat boiler (4-1) which is arranged in the flow path of the product gas mixture downstream of the second ammonia converter (3), a steam pipe (4) extending from the steam outlet of the second waste heat boiler (4-1) which opens into the steam pipe (5) leading from the first waste heat boiler (6) to the steam superheater (2-1).

18. Plant according to one of claims 14 to 17, **characterized in that** these means for supplying pure nitrogen and pure hydrogen for the reaction in the ammonia converters (1, 3) comprise, wherein the plant does not comprise a front end for producing synthesis gas by reforming.

19. Plant according to one of claims 14 to 18, **characterized in that** at least two catalyst beds (1A, 1B) are arranged in the first ammonia converter (1) and/or at least two catalyst beds (3A, 3B) are arranged in the second ammonia converter (3) , wherein preferably at least one heat exchanger (1-2, 3-2) is arranged within the first ammonia converter (1) and/or within the second ammonia converter (3), which heat exchanger is assigned to the first catalyst bed (1 A, 3 A) in this ammonia converter, wherein no heat exchanger is assigned to the respective second catalyst bed (1 B, 3 B) of the respective ammonia converter.

## Revendications

1. Procédé de production d'ammoniac, dans lequel les gaz de départ azote et hydrogène sont mis en réaction dans un premier convertisseur d'ammoniac (1) qui comprend au moins un lit catalytique (1A, 1B), le mélange gazeux produit sortant du premier convertisseur d'ammoniac étant passé à travers au moins une chaudière à récupération de chaleur (6) et refroidi, de la vapeur d'eau étant générée, le mélange gazeux produit étant ensuite acheminé en aval de la chaudière à récupération de chaleur (6) vers un deuxième convertisseur d'ammoniac (3) qui comprend également au moins un lit catalytique (3A, 3B), **caractérisé en ce que** le mélange gazeux produit (D) sortant du premier convertisseur d'ammoniac (1) est d'abord acheminé à travers un surchauffeur de vapeur (2-1), puis à travers une chaudière à récupération de chaleur (6) disposée en aval de celui-ci, dans laquelle de la vapeur est produite, avant que le mélange gazeux produit (E) soit acheminé vers le deuxième convertisseur d'ammoniac (3).

2. Procédé selon la revendication 1, **caractérisé en ce que** la vapeur générée dans la chaudière à récupération de chaleur (6) est ensuite acheminée vers le surchauffeur de vapeur (2-1) et y est encore chauffée.

3. Procédé selon la revendication 2, **caractérisé en ce que** la vapeur surchauffée dans le surchauffeur de vapeur (2-1) est utilisée comme vapeur motrice pour au moins une turbine.

4. Procédé selon l'une des revendications 1 à 3, **caractérisé en ce que** le mélange gazeux produit (D) a une température supérieure à 485 °C, de préférence supérieure à 490 °C, de préférence particulière d'au moins 495 °C, à la sortie du premier convertisseur d'ammoniac (1).

5. Procédé selon l'une des revendications 1 à 4, **caractérisé en ce que** le mélange gazeux produit provenant du premier convertisseur d'ammoniac (1) a une température d'au moins 380 °C, de préférence d'au moins 400 °C, et plus préférablement d'au moins 420 °C, après avoir traversé le surchauffeur de vapeur (2-1), de préférence d'au moins 430 °C.

6. Procédé selon l'une des revendications 1 à 5, **caractérisé en ce que** le mélange gazeux produit (E) provenant du premier convertisseur d'ammoniac (1) a une température inférieure à 360 °C, de préférence inférieure à 340 °C, après avoir traversé la chaudière à récupération de chaleur (6).

7. Procédé selon l'une des revendications 2 à 6, **caractérisé en ce que** de la vapeur à une température inférieure à 320 °C, de préférence à une température inférieure à 310 °C, de préférence à une température inférieure à 300 °C, est générée dans la chaudière à récupération de chaleur (6) puis acheminée vers le surchauffeur de vapeur (2-1) où elle est encore chauffée.

8. Procédé selon l'une des revendications 2 à 7, **caractérisé en ce que** dans le surchauffeur de vapeur (2-1), la vapeur qui lui est fournie par la chaudière à récupération de chaleur (6) est encore chauffée à au moins 420 °C, de préférence à au moins 440 °C, et plus préférablement à au moins 460 °C.

9. Procédé selon l'une des revendications 7 ou 8, **caractérisé en ce que** de la vapeur est générée dans la chaudière à récupération de chaleur (6) à une pression inférieure à 110 bara, de préférence à une pression inférieure à 90 bara, de manière particulièrement préférée à une pression inférieure à 80 bara, qui est de préférence présente sous forme de vapeur saturée à la température mentionnée dans la revendication 7.

10. Procédé selon la revendication 4 ou l'une des revendications 5 à 9 se référant à la revendication 4, **caractérisé en ce que** le premier convertisseur d'ammoniac (1) comprend au moins deux lits catalytiques (1A, 1B) à travers lesquels le mélange gazeux réactionnel s'écoule successivement, dans lequel la température élevée du mélange gazeux produit (D) à la sortie du premier convertisseur d'ammoniac (1) est obtenue par un pourcentage de conversion plus élevé des gaz réactifs grâce à l'utilisation d'une quantité accrue de catalyseur dans le premier convertisseur d'ammoniac (1) par rapport aux procédés standard.

11. Procédé selon l'une des revendications 1 à 10, **caractérisé en ce que** le premier convertisseur d'ammoniac (1) comprend au moins deux lits catalytiques (1A, 1B) à travers lesquels le mélange gazeux réactionnel s'écoule successivement, dans lequel le mélange gazeux réactionnel est refroidi après avoir traversé le premier lit catalytique au moyen d'un échangeur de chaleur (1-2) disposé dans le convertisseur d'ammoniac, dans lequel aucun refroidissement du mélange gazeux produit n'est prévu après son passage à travers le deuxième lit catalytique (1 B) dans le premier convertisseur d'ammoniac (1) et le mélange gazeux produit est acheminé vers le surchauffeur de vapeur (2-1) sans refroidissement supplémentaire.

12. Procédé selon l'une des revendications 1 à 11, **caractérisé en ce qu'**une autre chaudière à récupération de chaleur (4-1) est disposée en aval du deuxième convertisseur d'ammoniac (3), dans lequel de la vapeur supplémentaire est générée à partir de la chaleur du mélange gazeux produit sortant du deuxième convertisseur d'ammoniac (3), cette vapeur étant acheminée vers une conduite de vapeur partant de la première chaudière à récupération de chaleur (6), combinée à la vapeur générée dans la première chaudière à récupération de chaleur (6), puis acheminée vers le surchauffeur de vapeur (2-1).

13. Procédé selon l'une des revendications 1 à 12, **caractérisé en ce que** de l'azote pur et de l'hydrogène pur sont fournis au premier convertisseur d'ammoniac (1) en tant que réactifs frais, qui n'ont pas été produits par reformage dans une partie avant attribuée à l'installation de production d'ammoniac.

14. Installation pour la production d'ammoniac, en particulier pour utilisation dans un procédé selon l'une des revendications 1 à 13, comprenant un premier convertisseur d'ammoniac (1) contenant au moins un lit catalytique (1A, 1B), comprenant en outre un deuxième convertisseur d'ammoniac (3) contenant également au moins un lit catalytique (3A, 3B), dans laquelle au moins une chaudière à récupération de chaleur (6) est disposée dans le trajet d'écoulement du mélange gazeux produit s'écoulant du premier convertisseur d'ammoniac (1) vers le deuxième convertisseur d'ammoniac (3), **caractérisé en ce que** l'installation comprend en outre au moins un surchauffeur de vapeur (2-1) qui est disposé dans le trajet d'écoulement du mélange gazeux produit en aval du premier convertisseur d'ammoniac (1), en amont de la chaudière à récupération de chaleur (6) et entre le premier convertisseur d'ammoniac (1) et le deuxième convertisseur d'ammoniac (3).

15. Installation selon la revendication 14, **caractérisé en ce qu'**il comprend en outre au moins un tuyau de vapeur (5) pour la vapeur générée dans la chaudière à récupération de chaleur (6), qui mène de la sortie de vapeur de la chaudière à récupération de chaleur (6) à l'entrée de vapeur du surchauffeur de vapeur (2-1).

16. Installation selon l'une des revendications 14 ou 15, **caractérisé en ce qu'**il comprend au moins une turbine pour entraîner au moins un compresseur, et au moins une conduite (12) pour la vapeur surchauffée est prévue, qui s'étend depuis la sortie de vapeur du surchauffeur de vapeur (2-1) et mène au côté entraînement de la turbine.

17. Installation selon l'une des revendications 14 à 16, **caractérisé en ce qu'**il comprend au moins une deuxième chaudière à récupération de chaleur (4-1) qui est disposée dans le trajet d'écoulement du mélange gazeux produit en aval du deuxième convertisseur d'ammoniac (3), un tuyau de vapeur (4) s'étendant depuis la sortie de vapeur de la deuxième chaudière à récupération de chaleur (4-1) qui débouche dans le tuyau de vapeur (5) menant de la première chaudière à récupération de chaleur (6) au surchauffeur de vapeur (2-1).

18. Installation selon l'une des revendications 14 à 17, **caractérisée en ce que** ces moyens pour fournir de l'azote pur et de l'hydrogène pur pour la réaction dans les convertisseurs d'ammoniac (1, 3) comprennent, dans laquelle l'installation ne comprend pas une partie avant pour produire du gaz de synthèse par reformage.

19. Installation selon l'une des revendications 14 à 18, **caractérisé en ce que** au moins deux lits catalytiques (1A, 1B) sont disposés dans le premier convertisseur d'ammoniac (1) et/ou au moins deux lits catalytiques (3A, 3B) sont disposés dans le deuxième convertisseur d'ammoniac (3) , dans lequel, de préférence, au moins un échangeur de chaleur (1-2, 3-2) est disposé à l'intérieur du premier convertisseur d'ammoniac (1) et/ou à l'intérieur du deuxième convertisseur d'ammoniac (3), lequel échangeur de chaleur est associé au premier lit catalytique (1A, 3A) dans ce convertisseur d'ammoniac, dans lequel aucun échangeur de chaleur n'est associé au deuxième lit catalytique (1B, 3B) respectif du convertisseur d'ammoniac respectif.
